# EUROPEAN PATENT APPLICATION

(11) **EP 1 770 833 A1**
(43) Date of publication of application: **04.04.2007**
(21) Application number: 04746594.3
(22) Date of filing: 28.06.2004
(51) Int. Cl.: H01S 3/0941, H01S 3/06

(54) **SOLID-STATE LASER EXCITATION MODULE**

(71) Applicant: MITSUBISHI ELECTRIC CORPORATION, Chiyoda-ku Tokyo 100-8310 (JP)
(72) Inventor: Yamamoto, Syuhei, Chiyoda-ku, Tokyo 1008310 (JP); Yanagisawa, Takayuki, Chiyoda-ku, Tokyo 1008310 (JP); Hirano, Yoshihito, Chiyoda-ku, Tokyo 1008310 (JP)
(74) Representative: Pfenning, Meinig & Partner GbR
(86) International application number: PCT/JP2004/009125
(87) International publication number: WO 2006/001063

(57) **Abstract**

A pumping module includes a solid state laser medium 3 having a light incidence surface 3a which is bonded to a slab waveguide 2 and which accepts pumping light 1 propagating through the slab waveguide 2, for absorbing the pumping light 1 introduced thereinto via the light incidence surface 3a to amplify laser light, a total reflection film 4 for total-reflecting the laser light which emerges from an opposite surface 3b of the solid state laser medium 3, and an antireflection coating 7 for making the laser light total-reflected by the total reflection film 4 pass therethrough to output the laser light to outside the pumping module. As a result, the pumping module can output high-intensity high-power laser light.

## Description

### Field of the Invention

The present invention relates to a solid-state-laser pumping module that absorbs pumping light so as to amplify laser light.

### Background of the Invention

In general, a solid state laser medium for use in solid state lasers is shaped like a rod, a slab, a disk, or the like.
A disk-shaped solid state laser medium is formed so that it is shaped into a thin plate.
A disk-shaped solid state laser medium which accepts laser light incident thereupon via one of surfaces thereof having the largest area, reflects the laser light with a surface thereof which is opposite to the light incidence surface, and amplifies the laser light while making the laser light propagate in a direction of the thickness thereof is sometimes called an active mirror.

Heat which such a disk-shaped solid state laser medium generates when pumping incident laser light is exhausted from a surface (referred to as a heat exhaustion surface from here on) which is opposite to a light incidence surface via which the laser light is incident upon the solid state laser medium.
In this structure, since the direction in which the heat is exhausted is parallel to the optical axis of the laser light, a thermal lens effect and a heat birefringence effect are hardly produced. For this reason, such a disk-shaped solid state laser medium has a laser resonance condition which does not change dependently upon its laser output, and can therefore provide high-power laser light with stability. Thus, a disk-shaped solid state laser medium has such a specific advantage which cannot be provided by any other type solid state laser medium having another shape.

On the other hand, in order to acquire a larger gain with the same pumping power and the same thickness, a disk-shaped solid state laser medium needs to increase the density of pumping light by reducing the disk diameter thereof so as to condense the pumping light.
However, since a surface via which generated heat is exhausted is also reduced when the disk diameter is reduced, the efficiency of the heat exhaustion is reduced.
Therefore, the density of heat generation increases when the pumping light is condensed to the solid state laser medium having the reduced disk diameter. As a result, when the temperature of the solid state laser medium rises too much when pumping the laser light, the solid state laser medium itself may break thermally. In general, since a solid state laser medium decreases in its gain with rise in the temperature thereof, the efficiency of amplification also decreases.

In a disk-shaped solid state laser medium, when using an end surface pumping method of making pumping light be incident upon the disk-shaped solid state laser medium along a direction of propagation of laser light (i.e., the optical axis of the laser light), the distance propagated by the pumping light is defined by the thickness of the disk. A problem with such a disk-shaped solid state laser medium is therefore that the efficiency of absorption of the pumping light cannot be increased sufficiently, and hence the oscillation efficiency of the laser device is reduced.

When a side pumping method of making the pumping light be incident upon the disk-shaped solid state laser medium via a side surface parallel to the optical axis of the laser light is used instead of the above-mentioned end surface pumping method, the pumping light propagates along a direction of the diameter of the disk and a relatively long absorption length is provided. For this reason, the pumping light incident upon the disk is efficiently absorbed by the laser medium, and the pumping is carried out efficiently.
However, since a high-power pumping source for use with a disk-shaped solid state laser medium generates pumping light having a wide width, the disk-shaped solid state laser medium needs to be thickened in order to make the pumping light be incident upon the disk via a side surface of the disk.

In general, in a solid state laser medium of active mirror type, the thicker the disk is, the higher temperature the solid state laser medium has because heat generated by the solid state laser medium is exhausted from a reflecting surface of the disk. For this reason, the gain generated by the solid state laser medium is reduced, and hence the efficiency of amplification is also reduced.

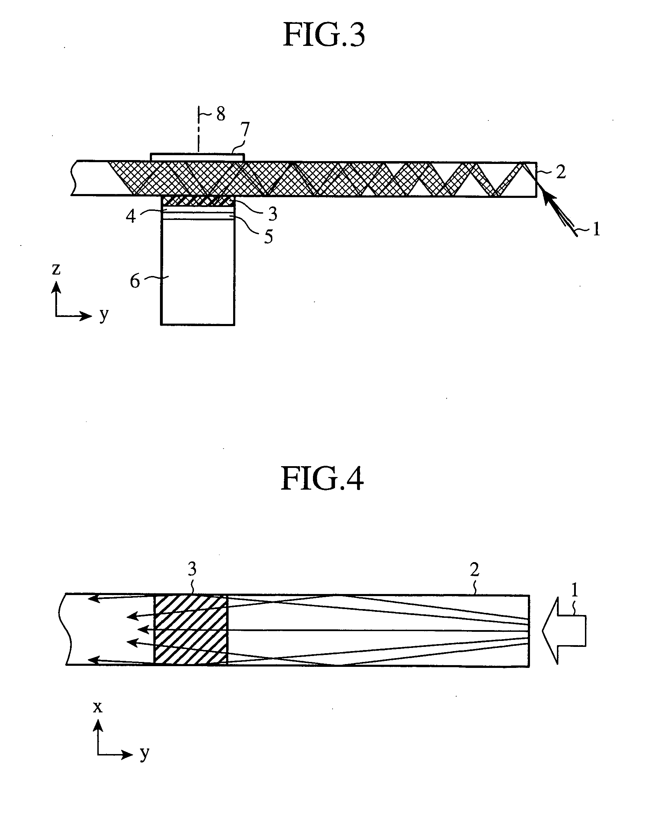

A method of pumping a disk-shaped solid state laser medium which is aimed at solving this problem is disclosed by the following patent reference 1.
A thin disk shown in Fig. 4 of patent reference 1 includes a plate-shaped laser medium to which a laser active material is added and a plate-shaped medium to which no laser active material is added, the plate-shaped laser medium and plate-shaped medium being integrally formed together.

When the thin disk is thus formed, while the area of a side surface via which pumping light is incident upon the disk-shaped solid state laser medium can be expanded, the thickness of the disk-shaped solid state laser medium can be thinned.
For this reason, while the thickness of the disk-shaped solid state laser medium can be reduced; the laser light can be made to be incident upon the disk-shaped solid state laser medium via the side surface of the thin disk using a high-power pumping source.
Therefore, the disk-shaped solid state laser medium having a thin thickness can be pumped efficiently by the high-power pumping light, and high-power laser light can be provided with a high degree of efficiency.

[Patent reference 1] US Patent: US2002/0039377A1 Fig. 4

In the related art solid-state-laser pumping module constructed as mentioned above, while the pumping light incident upon the solid-state-laser pumping module via the side surface of the thin disk propagates through the this disk while being repeatedly reflected between an upper and lower side surfaces of the thin disk, the pumping light is absorbed when passing through the plate-shaped laser medium to which a laser active material is added, whereas the pumping light propagates without being absorbed when passing through the plate-shaped medium to which no laser active material is added. For this reason, since locations where the pumping light passes through the above-mentioned laser-medium are discontinuously located depending on the angle with which the pumping light propagates through the solid-state-laser pumping module, the related art solid-state-laser pumping module has a pumping distribution which does not become uniform but becomes a discontinuous one. A problem is that in such a case, since the gain which the related art solid-state-laser pumping module generates by absorbing the pumping light also has a discontinuous distribution, it is difficult for the solid-state-laser pumping module to carry out high-intensity laser oscillation, and the beam quality of amplified laser light becomes worse than that of yet-to-be-amplified laser light even when the solid-state-laser pumping module is used as an amplifier.

Although the heat which the solid state laser medium generates when pumping the laser light is exhausted by a cooling means through the reflecting surface of the disk, since the temperature of the solid state laser medium rises according to the amount of generated heat, the temperature distribution of the solid state laser medium is also discontinuous depending on the pumping distribution. In general, since the refractive index of a medium changes with change in the temperature of the medium, light passing through the medium having temperature differences is refracted. Another problem is therefore that many local lens effects occur in the thin disc, it is therefore difficult for the solid-state-laser pumping module to carry out high-intensity laser oscillation, and the beam quality of the laser light is reduced at the time of amplification.

The present invention is made in order to solve the above-mentioned problems, and it is therefore an object of the present invention to provide a solid-state-laser pumping module which can output high-intensity high-power laser light.

### Disclosure of the Invention

A solid-state-laser pumping module in accordance with the present invention includes a plate-shaped solid state laser medium having a light incidence surface which is bonded to a plate-shaped waveguide and via which pumping light propagating through the plate-shaped waveguide is introduced into the plate-shaped solid state laser medium, for absorbing the pumping light introduced thereinto via the light incidence surface so as to amplify laser light, a total reflection member for total-reflecting the laser light which emerges from a surface of the solid state laser medium which is opposite to the light incidence surface of the solid state laser medium, and a transmission member for making the laser light total-reflected by the total reflection member pass therethrough to output the laser light to outside the solid-state-laser pumping module.

Therefore, the present invention offers an advantage of being able to output high-intensity high-power laser light.

### Brief Description of the Figures

[Fig. 1] Fig. 1 is a block diagram showing a solid-state-laser pumping module in accordance with embodiment 1 of the present invention;
[Fig. 2] Fig. 2 is a side view showing the solid-state-laser pumping module in accordance with embodiment 1 of the present invention;
[Fig. 3] Fig. 3 is an explanatory diagram showing a propagation state of pumping light;
[Fig. 4] Fig. 4 is an explanatory diagram showing a propagation state of the pumping light;
[Fig. 5] Fig. 5 is an explanatory diagram showing a propagation state of the pumping light;
[Fig. 6] Fig. 6 is an explanatory diagram showing a propagation state of the pumping light;
[Fig. 7] Fig. 7 is an explanatory diagram showing a propagation state of the pumping light;
[Fig. 8] Fig. 8 is an explanatory diagram showing a propagation state of the pumping light;
[Fig. 9] Fig. 9 is an explanatory diagram showing a propagation state of the pumping light;
[Fig. 10] Fig. 10 is an explanatory diagram showing a propagation state of the pumping light;
[Fig. 11] Fig. 11 is an explanatory diagram showing a propagation state of the pumping light;
[Fig. 12] Fig. 12 is an explanatory diagram showing a propagation state of the pumping light;
[Fig. 13] Fig. 13 is an explanatory diagram showing a propagation state of the pumping light;
[Fig. 14] Fig. 14 is a side view showing a solid-state-laser pumping module in accordance with embodiment 6 of the present invention;
[Fig. 15] Fig. 15 is a top plan view showing the solid-state-laser pumping module of Fig. 14; and
[Fig. 16] Fig. 16 is a top plan view showing a solid-state-laser pumping module in accordance with embodiment 7 of the present invention.

### Preferred Embodiments of the Invention

Hereafter, in order to explain this invention in greater detail, the preferred embodiments of the present invention will be described with reference to the accompanying drawings.

### Embodiment 1.

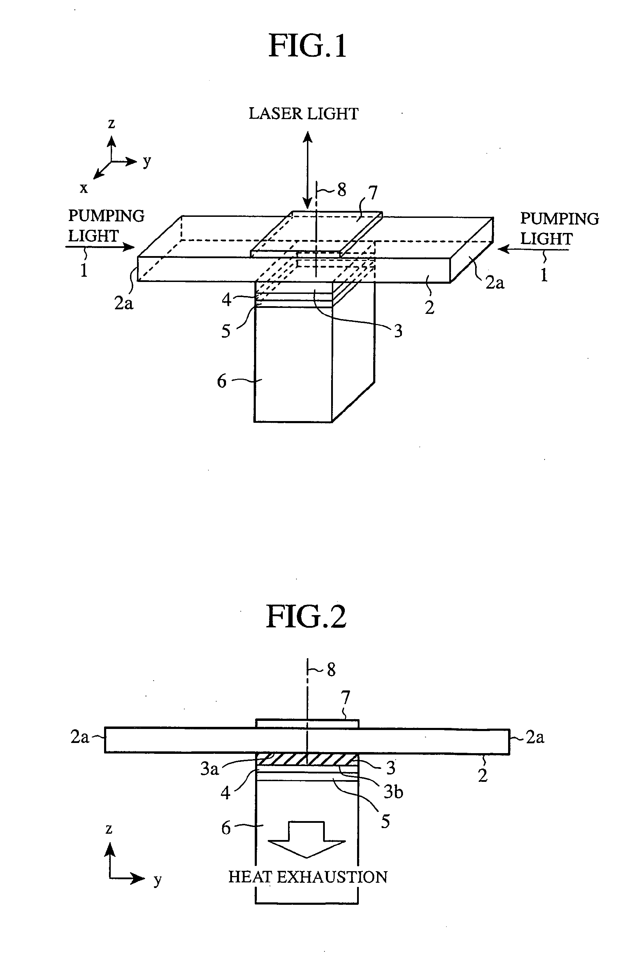

Fig. 1 is a block diagram showing a solid-state-laser pumping module in accordance with embodiment 1 of the present invention, and Fig. 2 is a side view showing the solid-state-laser pumping module in accordance with embodiment 1 of the present invention.
Figs. 3 and 4 show a propagation state of pumping light. Fig. 3 shows the pumping light when viewed from a side surface of the solid-state-laser pumping module, and Fig. 4 shows the pumping light when viewed from an upper surface of the solid-state-laser pumping module.

In the figures, a slab waveguide 2 is a plate-shaped waveguide which accepts pumping light 1 introduced thereinto via a light incidence surface 2a thereof, and which makes the introduced pumping light 1 propagate therethrough.
The slab waveguide 2 has a larger thickness than that in a direction of the z-axis of a solid state laser medium 3, and has a longer length than that in a direction of the y-axis of the solid state laser medium 3. The slab waveguide 2 is optically bonded to the solid state laser medium 3 with either an optical contact or diffusion bonding. The slab waveguide 2 is formed of a host material of the solid state laser medium 3, a crystal having much the same refractive index as the solid state laser medium 3, or a glass material of the solid state laser medium 3.

The thin disk-shaped (i.e., plate-shaped) solid state laser medium 3 has a light incidence surface 3a optically bonded to the slab waveguide 2, for accepting the pumping light 1 which is made to propagate through the slab waveguide 2 and is then introduced thereinto. The thin disk-shaped solid state laser medium 3 amplifies incident laser light by absorbing the pumping light 1 introduced thereinto via the light incidence surface 3a to acquire a gain.
A typical solid state laser medium can be used as the solid state laser medium 3. For example, Nd:YAG, Nd:YLF, Nd:Glass, Yb:YAG, Yb:YLF, Er:Glass, Er:YAG, Tm:YAG, Tm:YLF, Ho:YAG, Ho:YLF, Tm,Ho:YAG, Tm,Ho:YLF, Ti:Sapphire, Cr:LiSAF, or the like is used. The solid state laser medium 3 has a cross section perpendicular to the optical axis thereof, which is formed to have an arbitrary shape, such as a circular shape, an elliptical shape, or a polygonal shape. Especially, when the laser light is incident upon the solid state laser medium 3 in parallel with the optical axis 8, it is desirable that the cross section of the solid state laser medium 3 has such a shape as a circular shape or a regular polygonal shape which is symmetric with respect to the optical axis 8.

A total reflection film 4 is a total reflection member which is bonded to a surface (referred to as an opposite surface 3b from here on) of the solid state laser medium 3, which is opposite to the light incidence surface 3a of the solid state laser medium 3. The total reflection film 4 total-reflects the laser light which emerges from the opposite surface 3b to return the laser light to the solid state laser medium 3.
The total reflection film 4 can be formed of a plurality of dielectric thin films laminated. As an alternative, the total reflection film 4 can be formed by using vapor deposition of a metallic film.

A heat sink 6 is a cooling member which is bonded to the total reflection film 4 with a bonding agent 5, for exhausting heat which is generated by the solid state laser medium 3.
The heat sink 6 suppresses the temperature rise in the solid state laser medium 3 by removing the generated heat using, for example, cooling water, an air cooling fan, or the like. The bonding agent 5 can be metallic solder, an optical adhesive, a thermally conductive adhesive, or the like.

An antireflection coating 7 is a transmission member which is bonded to the slab waveguide 2, for accepting the laser light introduced thereinto from outside the pumping module and then providing the introduced laser light to the solid state laser medium 3, and for making the laser light, which is made to pass through the solid state laser medium 3 after total-reflected by the total reflection film 4, pass therethrough, so as to output the laser light to outside the pumping module.
The antiref lection coating 7 can be formed of, for example, a plurality of dielectric thin films laminated.

The pumping light 1 is made to be incident upon the solid state laser medium 3 so as to provide a gain to the solid state laser medium 3, and a high-power semiconductor laser or a pumping source having a fiber output can be used as a pumping source of the pumping light 1.
As an alternative, an LD bar having two or more semiconductor lasers which are arranged like bars, or a stack LD having two or more LD bars laminated can be used as the pumping source of the pumping light 1.

When such a pumping source is used, although the pumping light 1 can have high power, it is difficult to make the pumping light 1 be incident upon the interior of the slab waveguide 2 efficiently from the light incidence surface 2a of the slab waveguide 2 since the pumping source has a large light emission area.
Therefore, the efficiency of incidence of the pumping light upon the slab waveguide can be improved by reducing the beam diameter of the pumping light 1 by condensing the pumping light 1 using a not-shown optical component, such as a lens.
However, since the reducible limit of the beam diameter of the pumping light 1 is determined according to both the beam quality of the pumping source and the appearance and aberration amount of the optical component used for the beam diameter reduction, it is desirable that the thickness and width of the light incidence surface 2a of the slab waveguide 2 are made to be larger than the reducible limit of the beam diameter.

Next, the operation of the solid-state-laser pumping module in accordance with this embodiment of the present invention will be explained.
After being incident upon the slab waveguide 2 via the light incidence surface 2a of the slab waveguide 2, the pumping light 1 emitted out of the pumping source propagates through the slab waveguide 2 while being repeatedly reflected by all surfaces of the slab waveguide 2 other than the light incidence surface 2a.
Since the length in the direction of the y-axis of the slab waveguide 2 is longer than that in the direction of the y-axis of the solid state laser medium 3, the pumping light 1 incident upon the slab waveguide 2 via the light incidence surface 2a reaches a region of the slab waveguide 2 which is located above the solid state laser medium 3 after propagating through the interior of the slab waveguide 2.

Since the light incidence surface 3a of the solid state laser medium 3 is optically bonded to the slab waveguide 2, the pumping light 1 is introduced into the solid state laser medium 3 when reaching the region of the slab waveguide 2 which is located above the solid state laser medium 3.
The solid state laser medium 3 generates a gain by absorbing the pumping light 1 (i.e., stores energy which is used for amplification of the laser light) when the pumping light 1 is introduced thereinto via the light incidence surface 3a.

On the other hand, when the laser light from outside the pumping module is incident upon the antireflection coating 7 in parallel with the optical axis 8 of the solid state laser medium 3 (i.e., the laser light is incident upon the antireflection coating 7 in a downward direction of the figure), the laser light passes through the antireflection coating 7 and slab waveguide 2 and is then incident upon the solid state laser medium 3.

Since the solid state laser medium 3 generates a gain by absorbing the pumping light 1, as mentioned above, the solid state laser medium 3 acts as an amplifier for amplifying the laser light incident thereupon.
The laser light amplified by the solid state laser medium 3 is made to emerge towards the total reflection film 4 via the opposite surface 3b of the solid state laser medium 3.

When receiving the laser light via the opposite surface 3b of the solid state laser medium 3, the total reflection film 4 acts so as to total-reflect the laser light and return the laser light to the solid state laser medium 3.
The solid state laser medium 3 amplifies the laser light again when receiving the laser light returned thereto from the total reflection film 4.
The laser light amplified by the solid state laser medium 3 then passes through the slab waveguide 2 and antireflection coating 7, and then emerges to outside the pumping module (i.e. , the laser light is made to emerge to outside the pumping module in an upward direction of the figure).

When absorbing the pumping light 1, the solid state laser medium 3 generates heat, and this heat is conducted to the heat sink 6 via the total reflection film 4 and bonding agent 5.
The heat sink 6 exhausts the heat therefrom by using, for example, cooling water, an air cooling fan, or the like. As a result, the temperature rise of the solid state laser medium 3 can be suppressed.

In the solid-state-laser pumping module in accordance with this embodiment 1, the solid state laser medium 3 absorbs the pumping light 1 and generates a gain, as previously mentioned. The gain generation will be explained a little more concretely.
When the pumping light 1 incident upon the solid state laser medium 3 via the slab waveguide 2 reaches the total reflection film 4 after propagating through the interior of the solid state laser medium 3 while being absorbed by the solid state laser medium 3, the pumping light 1 is reflected by the total reflection film 4 and then propagates through the interior of the solid state laser medium 3 again while being absorbed by the solid state laser medium 3.

The pumping light 1 which has not been fully absorbed by the solid state laser medium 3 is incident upon the slab waveguide 2 again, and is further reflected by an inner surface (i.e., a surface which is opposite to another surface which is bonded to the light incidence surface 3a of the solid state laser medium 3) of the slab waveguide 2. As a result, the pumping light 1 which has not been fully absorbed by the solid state laser medium 3 is incident upon the solid state laser medium 3 and is absorbed by the solid state laser medium 3 again.

When the direction in which the pumping light 1 propagating through the slab waveguide 2 is headed has a small angle with respect to the direction of the z-axis, the number of times which the pumping light 1 re-enters the solid state laser medium 3 increases since the number of times which the pumping light 1 is reflected by the above-mentioned inner surface of the slab waveguide increases. For this reason, the total optical path length which the pumping light 1 travels in the solid state laser medium 3 becomes long, and a high absorption rate can be provided.
In contrast, when the direction in which the pumping light 1 propagating through the slab waveguide 2 is headed has a large angle with respect to the direction of the z-axis, the number of times which the pumping light 1 re-enters the solid state laser medium 3 decreases since the number of times which the pumping light 1 is reflected by the above-mentioned inner surface of the slab waveguide decreases. In this case, since the pumping light 1 enters the solid state laser medium 3 at a large angle with respect to the direction of the z-axis, the optical path length which the pumping light 1 travels every time in the solid state laser medium 3 becomes long, and a high absorption rate can be provided.
In either of these two cases, the pumping light 1 is absorbed by the solid state laser medium 3 with a high absorption rate, and the solid state laser medium 3 can generate a large gain.

In accordance with this embodiment 1, since the thickness in the direction of the z-axis of the solid state laser medium 3 is thinner than that in the direction of the z-axis of the slab waveguide 2, the solid state laser medium 3 can be thinned relatively even if the thickness in the direction of the z-axis of the slab waveguide 2 is increased and the light incidence surface 2a via which the pumping light 1 is incident upon the slab waveguide 2 is enlarged.
For this reason, it is possible to sufficiently thin the solid state laser medium 3 which generates heat by absorbing the pumping light 1, and it is therefore possible to suppress the temperature rise of the solid state laser medium 3. Therefore, a decrease in the gain with the temperature rise can be reduced to a minimum, and a decrease in the absorption efficiency of the pumping light 1 with the temperature rise can be reduced to a minimum. Using the solid-state-laser pumping module in accordance with this embodiment, a high-power laser oscillator or amplifier can be constructed.

In addition, in accordance with this embodiment 1, the pumping light 1 is so condensed as to have a small size at the light incidence surface 2a of the slab waveguide 2. Therefore, the pumping light 1 which is incident upon the interior of the slab waveguide 2 propagates through the slab waveguide 2 while broadening. For this reason, when the pumping light 1 has propagated through the interior of the slab waveguide 2 and then reaches the region which is located above the solid state laser medium 3, the pumping light has a size which is sufficiently large compared with a disk surface (i.e., an xy surface) of the solid state laser medium 3.

Assuming that the length in the direction of the y-axis of the slab waveguide 2 is equal to that in the direction of the y-axis of the solid state laser medium 3, since the pumping light 1 incident upon the interior of the slab waveguide 2 from the light incidence surface 2a reaches the region which is located above the solid state laser medium 3 before broadening sufficiently, an extremely-partial region of the solid state laser medium 3 is pumped strongly by the pumping light and a distribution of absorption of the pumping light 1 occurs in the disk surface. As a result, a gain distribution and a temperature distribution occur, and oscillation of high-intensity laser light is prevented or the beam quality of the amplified laser light is degraded.

In contrast, in accordance with this embodiment 1, since the pumping light 1 incident upon the solid state laser medium 3 has a size which is sufficiently large compared with that of the disk surface of the solid state laser medium 3, the whole disk surface of the solid state laser medium can be sufficiently pumped with a high degree of uniformity. For this reason, the gain generated by the solid state laser medium also has a high degree of uniformity over the whole disk surface, and high-intensity laser oscillation or high-uniformity amplification can be achieved.

Furthermore, since the heat which the solid state laser medium 3 generates when pumped is also uniform over the whole disk surface, the disk surface has a uniform temperature distribution, and a distribution of refractive indices which occurs in the solid state laser medium 3 depending on the difference in temperature between the laser medium and the disk surface of the slab waveguide 2 is minimized. For this reason, high-intensity laser oscillation can be carried out, and, even when the solid-state-laser pumping module is used as an amplifier, amplification of the incident laser light can be carried out without degradation of the beam quality of the amplified laser light.

As can be seen from the above description, since the solid-state-laser pumping module in accordance with this embodiment 1 includes the solid state laser medium 3 having the light incidence surface 3a which is bonded to the slab waveguide 2, and via which the pumping light 1 propagating through the slab waveguide 2 is introduced into the solid state laser medium, for absorbing the pumping light 1 introduced thereinto via the light incidence surface 3a so as to amplify the laser light, the total reflection film 4 for total-reflecting the laser light which emerges from the opposite surface 3b of the solid state laser medium 3, and the antireflection coating 7 for making the laser light total-reflected by the total reflection film 4 pass therethrough to output the laser light to outside the solid-state-laser pumping module, the solid-state-laser pumping module can output high-intensity high-power laser light.

Although omitted in Figs. 1 and 2, a partial reflecting mirror for allowing a part of the laser light to pass therethrough while reflecting the remainder of the laser light can be arranged on the optical axis 8 (e.g., the partial reflecting mirror is arranged above the antireflection coating 7), so that a laser cavity for oscillating laser light can consist of a path which consists of the partial reflecting mirror and the solid-state-laser pumping module of Fig. 1. As a result, the solid-state-laser pumping module can be used as a laser device that outputs the laser light which is amplified by the laser cavity via the partial reflecting mirror.

### Embodiment 2.

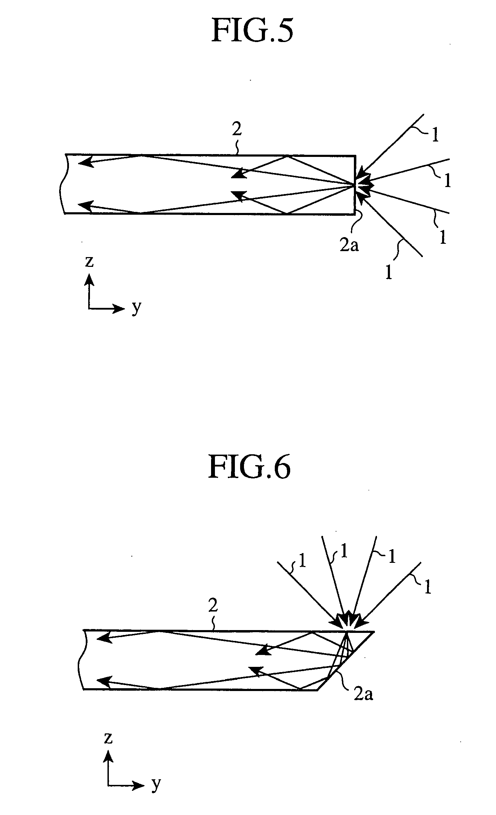

In the solid-state-laser pumping module in accordance with above-mentioned embodiment 1, the pumping light 1 is incident upon the slab waveguide 2 from predetermined directions, as previously mentioned. As an alternative, rays of pumping light 1 can be incident upon the light incidence surface 2a of the slab waveguide 2, which is parallel to the z-axis, at various angles with respect to the light incidence surface 2a, as shown in Fig. 5.
When rays of pumping light 1 are thus made to be incident upon the light incidence surface 2a of the slab waveguide 2 at various angles, the pumping light 1 propagating through the interior of the slab waveguide 2 has various angles with respect to upper and lower surfaces of the slab waveguide and the rays of pumping light 1 are therefore incident upon the solid state laser medium 3 at various angles with respect to the optical axis of the solid state laser medium. For this reason, the uniformity of the pumping distribution of the solid state laser medium 3 is further improved.

In a variant, the pumping light 1 can be made to be incident upon the interior of the slab waveguide 2 via a part of an xy surface of the slab waveguide 2 which is provided as the light incidence surface 2a of the slab waveguide 2, as shown in Fig. 6.
In this case, the pumping light 1 incident upon the interior of the slab waveguide 2 can be reflected by an inclined side surface of the slab waveguide 2, and can be made to propagate toward the solid state laser medium 3.
Since the flexibility of the arrangement of the pumping light source increases, the solid-state-laser pumping module can be reduced in size.

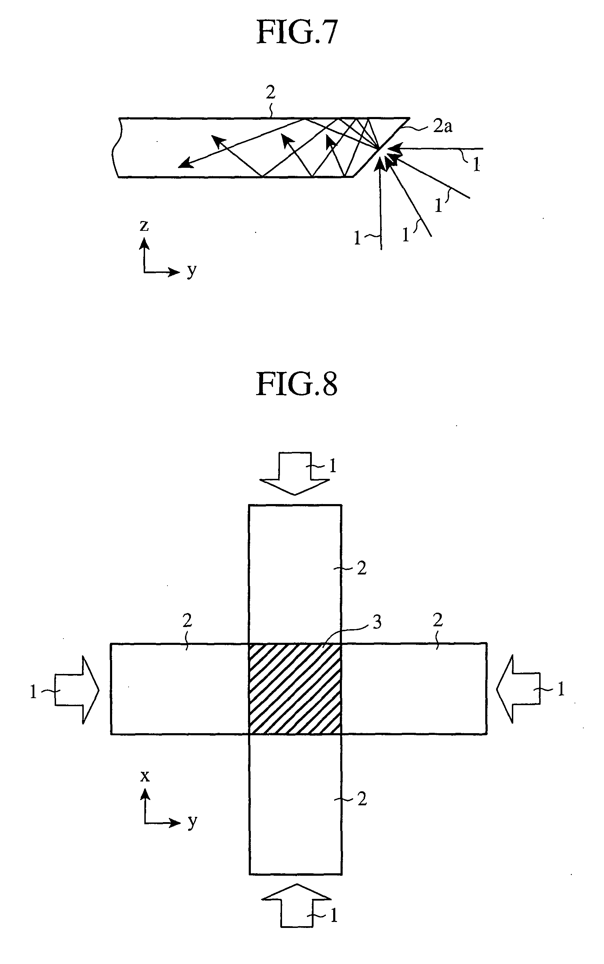

In another variant, the light incidence surface 2a of the slab waveguide 2 can be a side surface which is extending along the thickness of the slab waveguide, but is inclined with respect to the direction of the z-axis of the slab waveguide, as shown in Fig. 7.
In this case, the angles with respect to the upper and lower surfaces at which the pumping light 1 propagates through the slab waveguide 2 are increased by the angle of inclination of the light incidence surface 2a. For this reason, all rays of the pumping light 1 which are incident upon the slab waveguide 2 at various angles with respect to the inclined side surface are not parallel to the direction of the y-axis of the slab waveguide 2, and are reflected by the xy surfaces of the slab waveguide 2 which are opposite to each other.

For example, if the pumping light 1 propagates through the interior of the slab waveguide 2 in parallel with the direction of the y-axis of the slab waveguide, the pumping light 1 is not absorbed by the solid state laser medium 3 since the pumping light 1 passes through the interior of the slab waveguide 2 without entering the solid state laser medium 3 even if it reaches a region of the slab waveguide 2 which is located above the solid state laser medium 3.
In contrast, according to the structure of Fig. 7, since all the rays of pumping light 1 are not parallel to the direction of the y-axis of the slab waveguide 2 and are reflected by the xy surfaces of the slab waveguide 2 which are opposite to each other, all the rays of pumping light 1 enter the solid state laser medium 3. For this reason, the proportion of the pumping light 1 absorbed by the solid state laser medium 3 becomes high, and the solid-state-laser pumping module can carry out high-power laser oscillation or amplification with a high degree of efficiency.

In above-mentioned embodiments 1 and 2, although no mention is made, an antireflection coating having a nonreflective characteristic against the pumping light 1 can be formed on the light incidence surface 2a of the slab waveguide 2. Such the antireflection coating can be formed of, for example, dielectric thin films laminated. As a result, the pumping light 1 can be made to be incident upon the slab waveguide 2 efficiently.

### Embodiment 3.

In above-mentioned embodiments 1 and 2, the pumping light 1 is made to be incident upon the slab waveguide 2 from two directions of the slab waveguide 2, as previously mentioned. As an alternative, as shown in Fig. 8, four slab waveguides 2 can be arranged so that they can have 4-fold rotational symmetry with respect to the solid state laser medium 3, and four beams of pumping light 1 can be made to be incident upon the four slab waveguides 2 from four directions, respectively.

Since the solid state laser medium 3 is pumped from the four directions when the four beams of pumping light 1 are made to be incident upon the four slab waveguides 2 from the four directions, respectively, the solid state laser medium 3 can be pumped with higher power compared with a case where the solid state laser medium 3 is pumped from only two directions, like that of any one of above-mentioned embodiments 1 and 2.
For this reason, the solid-state-laser pumping module in accordance with this embodiment can carry out high-power pumping and can be used as a laser device which outputs high-power laser light.

The solid-state-laser pumping module in accordance with this embodiment 3 carries out pumping of 4-fold rotational symmetry, as previously mentioned. However, the number of pumping directions and the number of slab waveguides 2 are not limited to four.
The pumping directions do not need to be rotational symmetric with respect to the solid state laser medium, and can be asymmetric with respect to the solid state laser medium.
Furthermore, the solid state laser medium 3 has a disk surface which is shaped like a rectangle, as shown in the figure. As an alternative, the disk surfaces of the solid state laser medium 3 can have such a shape as a circular shape, an elliptical shape, or a polygonal shape.
Especially, when the disk surfaces of the solid state laser medium 3 have a circular shape, since laser light of circular cross section overlaps the disk surfaces with a high degree of overlapping, the solid-state-laser pumping module can provide high-power laser light with a higher degree of efficiency.

### Embodiment 4.

In above-mentioned embodiments 1 to 3, although no mention is made, the solid state laser medium 3 has a longer length in a disk surface (i.e. , an xy surface) of the solid state laser medium 3 than that in the direction of the thickness of the solid state laser medium 3 (i.e., the direction of the z-axis). Therefore, fluorescence emitted out of the solid state laser medium 3 having a gain is repeatedly reflected by the disk surfaces of the solid state laser medium 3, and undesired extraction of energy may be carried out. Such undesired extraction of energy is generally called "parasitic oscillation."
When parasitic oscillation occurs, the gain for laser light incident upon the solid state laser medium 3 from the direction of the thickness of the solid state laser medium 3 decreases, and the laser output and amplification are reduced.

In accordance with this embodiment 4, in order to prevent parasitic oscillation from occurring, the solid state laser medium 3 is so formed as to have roughened side surfaces extending in the direction of the thickness thereof.
Thus, when the solid state laser medium 3 is so formed as to have roughened side surfaces extending in the direction of the thickness thereof, fluorescence which is incident upon a roughened side surface after propagating between the disk surfaces of the solid state laser medium 3 is partially diffused and reflected by the roughened side surface and partially penetrates the roughened side surface. For this reason, since no optical path through which fluorescence goes around within the solid state laser medium 3 exists in the solid state laser medium 3, the occurrence of parasitic oscillation is prevented.

In a variant, the side surfaces extending in the direction of the thickness of the solid state laser medium 3 can be formed so that they are not parallel to and are inclined with respect to the direction of the z-axis. In this case, the side surfaces extending in the direction of the thickness of the solid state laser medium 3 can be optical ones rather than roughened ones.
As a result, since fluorescence propagating between the disk surfaces of the solid state laser medium 3 travels toward the slab waveguide 2 after being incident upon a side surface extending in the direction of the thickness of the solid state laser medium 3, no optical path through which fluorescence goes around within the solid state laser medium 3 exists in the solid state laser medium 3 and the occurrence of parasitic oscillation is prevented. Therefore, the present embodiment offers an advantage of being able to provide a high-power high-efficiency laser oscillator and a high-power high-efficiency laser amplifier.

### Embodiment 5.

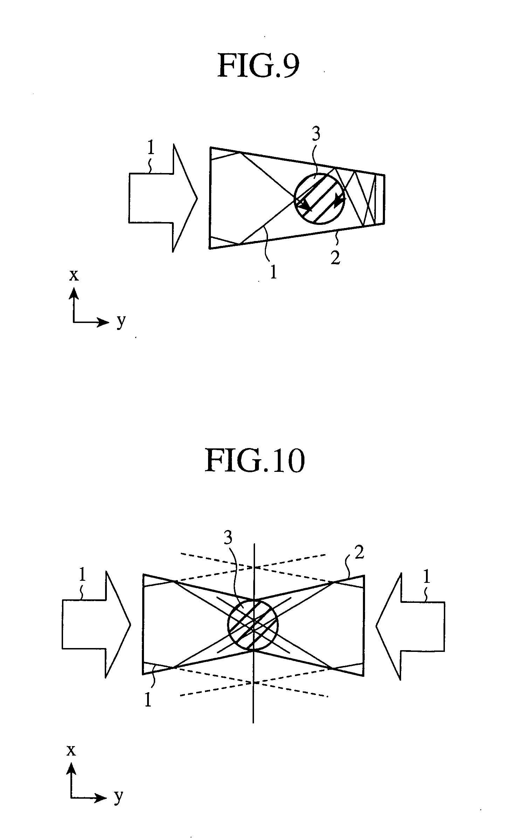

In accordance with above-mentioned embodiments 1 to 4, the light incidence surface 2a of the slab waveguide 2 has the same area as a cross section of the slab waveguide 2 at a central portion. As an alternative, the upper and lower side surfaces of the slab waveguide 2 can be tapered down so that the cross-sectional area of the slab waveguide 2 decreases with distance from the light incidence surface 2a, as shown in Fig. 9.

The structure of Fig. 9 is effective when the pumping light 1 has a large divergence and when the pumping light 1 at the light incidence surface 2a of the slab waveguide 2 has a larger width than the solid state laser medium 3.
In other words, the slab waveguide 2 whose upper and lower side surfaces are tapered down makes the pumping light 1 be incident upon the solid state laser medium 3 while condensing the pumping light 1 with respect to the direction of the x-axis. As a result, the efficiency of incidence of the pumping light 1 upon the solid state laser medium 3 can be increased.

The tapered side surfaces of the slab waveguide 2 can be so formed as to repeatedly reflect both a component of the pumping light 1 which passes through a region above the solid state laser medium 3 without entering the solid state laser medium 3, and another component of the pumping light 1 which re-enters the slab waveguide 2 after entering the solid state laser medium 3 to make them be incident upon the solid state laser medium 3. Furthermore, a total reflection film for total-reflecting the pumping light 1 can be formed on a surface which is opposite to the light incidence surface 2a of the slab waveguide 2, thereby providing a high degree of efficiency of incidence of the pumping light upon the solid state laser medium.

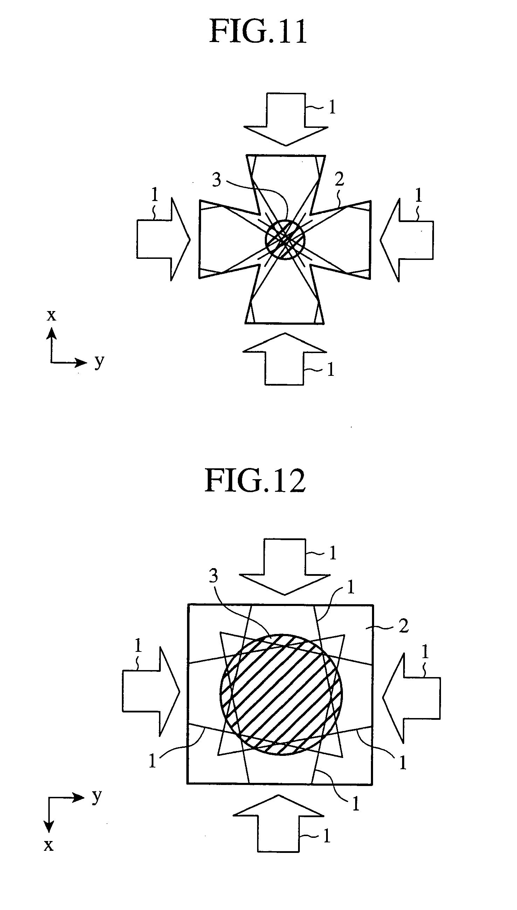

In the structure of Fig. 9, one beam of pumping light 1 is provided. As an alternative, two or more beams of pumping light 1 and two or more slab waveguides 2 can be provided, as shown in Figs. 10 and 11. In these variants, since the plural beams of pumping light 1 having larger total power can be made to be incident upon the solid state laser medium 3, the solid state laser medium 3 can be increased in gain and output laser power.

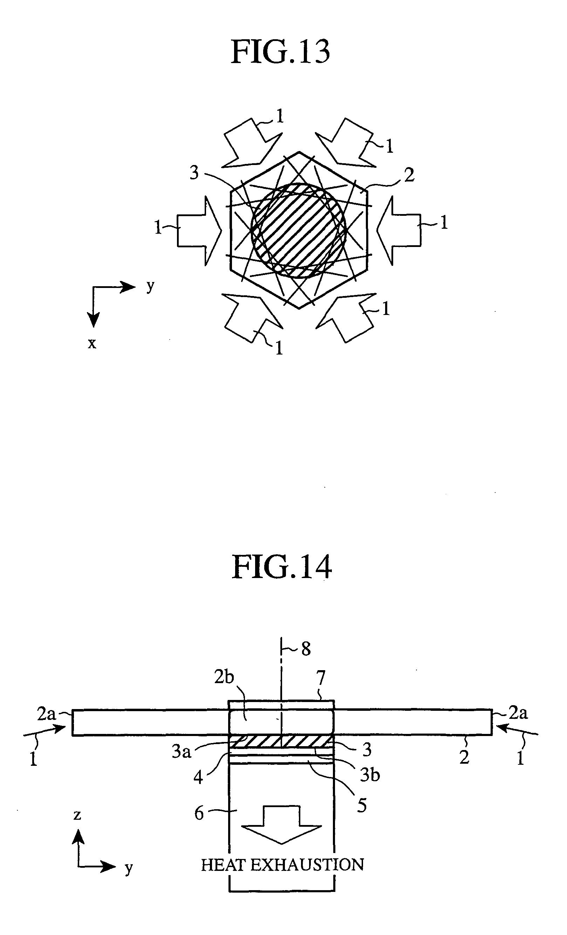

The structures of Figs. 9 to 11 make the shape of the slab waveguide 2 become complicated and therefore cause difficulty in manufacturing the pumping module and hence increase in the cost of manufacturing the pumping module.
Then, as shown in Figs. 12 and 13, the xy side surfaces of the slab waveguide 2 can be shaped like a polygon so that plural beams of the pumping light 1 can be respectively incident upon other side surfaces of the slab waveguide 2 which respectively correspond to the sides of the polygon.

In this case, the pumping light 1 is repeatedly reflected by only the xy side surfaces which are opposite to each other within the slab waveguide 2, and the pumping light 1 diverges in an xy plane as it propagates toward the solid state laser medium.
In the solid-state-laser pumping module which is constructed as mentioned, since plural beams of the pumping light 1 outputted from two or more pumping sources can be made to be incident upon the solid state laser medium 3 using the slab waveguide 2 having a relatively simple shape, the gain and output laser power of the solid state laser medium 3 can be increased at a low cost.

### Embodiment 6.

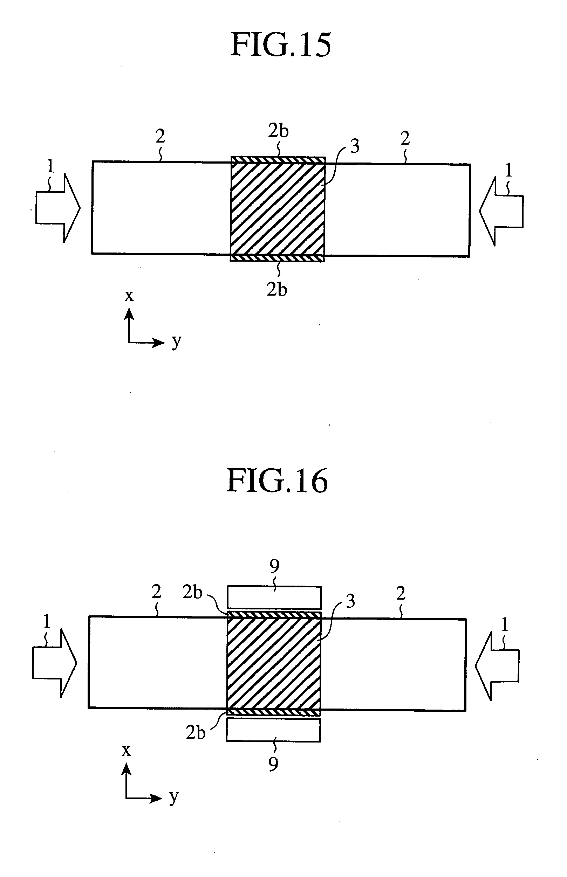

Fig. 14 is a side view showing a solid-state-laser pumping module in accordance with embodiment 6 of the present invention, and Fig. 15 is a top plan view showing the solid-state-laser pumping module of Fig. 14. In the figures, since the same numerals as shown in Fig. 2 denote the same components as those of Fig. 2 or like components, the explanation of these components will be omitted hereafter.
Side surfaces of a slab waveguide 2 extending in a direction of the thickness of the slab waveguide 2 include roughened surfaces 2b which are adjacent to a surface of the slab waveguide 2 which is optically bonded to a solid state laser medium 3. The roughened surfaces 2b are surfaces whose profile irregularity is very low with respect to the wavelength of laser light incident upon the pumping module.
The roughened surfaces 2b can be formed by omitting the grinding of the corresponding side surfaces of the slab waveguide 2 which has been cut into the shape. As an alternative, the roughened surfaces 2b can be formed by grinding all the side surfaces of the slab waveguide 2 and roughening the corresponding side surfaces using a file or another method.

In accordance with this embodiment 6, since part of all the side surfaces of the slab waveguide 2 is the roughened surfaces 2b, light which is incident upon each roughened surface 2b is partially diffused and reflected by each roughened surface 2b and the remainder of the light partially penetrates each roughened surface 2b. For this reason, four surfaces including a surface of a total reflection film 4, a surface of an antireflection coating 7, and the two side surfaces of the slab waveguide 2 which are adjacent to the surface of the slab waveguide 2 which is optically bonded to the solid state laser medium 3 do not act as an optical path along which fluorescence generated by the pumped solid state laser medium 3 goes around. Therefore, any parasitic oscillation with the above-mentioned four surfaces does not occur. For this reason, the solid-state-laser pumping module can provide a high-power laser oscillator and a high-power laser amplifier in which even if higher-power pumping is carried out, no parasitic oscillation occurs.

### Embodiment 7.

Fig. 16 is a top plan view showing a solid-state-laser pumping module in accordance with embodiment 7 of the present invention. In the figure, since the same numerals as shown in Fig. 15 denote the same components as those of Fig. 15 or like components, the explanation of these components will be omitted hereafter.
Reflecting members 9 are arranged outside roughened surfaces 2b of a slab waveguide 2, respectively, and act to reflect pumping light 1 which emerges from the roughened surfaces 2b and to return the pumping light 1 to the interior of the slab waveguide 2. The reflecting members 9 are arranged outside the roughened surfaces 2b of the slab waveguide 2, respectively, as shown in Fig. 16. As an alternative, the reflecting members 9 having the same area as the roughened surfaces 2b can be so arranged as to cover the roughened surfaces 2b. Each of the reflecting members 9 can alternatively have an area which is equal to that of a combination of each roughened surface 2a and each side surface of the solid state laser medium 3 extending in the direction of the thickness of the solid state laser medium 3 so as to cover them.

Each reflecting member 9 can be formed of a metallic thin film or a dielectric multilayer. Each reflecting member 9 can be placed so as to be close to the corresponding roughened surface 2b. As an alternative, ceramics or another high-reflective member can be placed so as to be close to the corresponding roughened surface 2b. A metallic thin film or a dielectric multilayer can be alternatively formed directly on each roughened surface 2b of the slab waveguide 2 and each side surface of the solid state laser medium 3 extending in the direction of the thickness of the solid state laser medium 3.

When the reflecting members 9 are thus arranged outside the roughened surfaces 2b of the slab waveguide 2, respectively, since a part of light which is incident upon each roughened surface 2b is diffused and reflected by each roughened surface 2b and the remainder of the light penetrates each roughened surface 2b, but the light penetrating each roughened surface 2b is reflected by the corresponding reflecting member 9, the light enters the interior of the slab waveguide 2 again and then propagates through the interior of the slab waveguide 2. Since the light which re-enters the slab waveguide 2 passes through the roughened surface 2b at this time, it diffuses toward various directions in the slab waveguide 2.

Even in this embodiment 7, although the solid state laser medium 3 has a gain and then generates fluorescence when pumped, since light which is incident upon each roughened surface 2b of the slab waveguide 2 is diffused and reflected, no optical path along which the generated fluorescence goes around and therefore the occurrence of parasitic oscillation is prevented.

In above-mentioned embodiment 6, when a ray of pumping light 1 which has been incident upon the slab waveguide 2 via the light incidence surface 2a and has propagated through the slab waveguide 2 is incident upon one roughened surface 2b of the slab waveguide 2 before being absorbed by the solid state laser medium 3, the ray of pumping light is partially reflected while being diffused and is then absorbed by the solid state laser medium 3, while a part of the remainder of the ray of pumping light emerges from the slab waveguide 2. This part of the remainder of the ray of pumping light cannot be absorbed by the solid state laser medium 3. For this reason, the efficiency of utilization of the pumping light 1 may be reduced.

In contrast, in accordance with this embodiment 7, since the reflecting members 9 are arranged outside the roughened surfaces 2b, respectively, rays of pumping light 1 which emerge from the roughened surfaces 2b can be made to be incident upon the interior of the slab waveguide 2 again.
As a result, since the solid state laser medium 3 can be made to absorb a larger proportion of the input pumping light 1 introduced into the slab waveguide, the solid-state-laser pumping module can provide a higher-efficiency high-power laser oscillator and a higher-efficiency high-power laser amplifier. Industrial Applicability

As mentioned above, a solid-state-laser pumping module in accordance with the present invention is provided with a thin disk-shaped solid state laser medium for amplifying laser light by absorbing pumping light to acquire a gain, and the thin disk-shaped solid state laser medium is suitable for a laser device for machining and a measurement device provided with a laser.

## Claims

1. A solid-state-laser pumping module comprising:
a plate-shaped waveguide for accepting pumping light introduced thereinto via a light incidence surface thereof, and for making the introduced pumping light propagate therethrough;
a plate-shaped solid state laser medium having a light incidence surface which is bonded to said plate-shaped waveguide and via which the pumping light propagating through said plate-shaped waveguide is introduced into said plate-shaped solid state laser medium, for absorbing the pumping light introduced thereinto via the light incidence surface so as to amplify laser light;
a total reflection member for total-reflecting the laser light which emerges from a surface of said solid state laser medium which is opposite to the light incidence surface of said solid state laser medium; and
a transmission member bonded to said plate-shaped waveguide, for making the laser light total-reflected by said total reflection member pass therethrough to output the laser light to outside said solid-state-laser pumping module.

2. The solid-state-laser pumping module according to Claim 1, **characterized in that** said module further comprises a cooling member for exhausting heat which is generated by said solid state laser medium.

3. The solid-state-laser pumping module according to Claim 1, **characterized in that** the light incidence surface of said plate-shaped waveguide is inclined with respect to a direction of a thickness of said plate-shaped waveguide.

4. The solid-state-laser pumping module according to Claim 1, **characterized in that** said solid state laser medium has a thinner thickness than said plate-shaped waveguide.

5. The solid-state-laser pumping module according to Claim 1, **characterized in that** said solid state laser medium has roughened side surfaces.

6. The solid-state-laser pumping module according to Claim 1, **characterized in that** said solid state laser medium has side surfaces which are inclined with respect to a direction of an optical axis of the laser light.

7. The solid-state-laser pumping module according to Claim 1, **characterized in that** said plate-shaped waveguide has a cross-sectional area which decreases with distance from the light incidence surface.

8. The solid-state-laser pumping module according to Claim 1, **characterized in that** said plate-shaped waveguide has roughened side surfaces which are adjacent to a side surface thereof which is bonded to said solid state laser medium.

9. The solid-state-laser pumping module according to Claim 8, **characterized in that** said pumping module further comprises reflecting members for reflecting light which are arranged outside the roughened side surfaces of said plate-shaped waveguide, respectively.
